# EUROPEAN PATENT SPECIFICATION

(11) **EP 3 742 099 B1**
(45) Date of publication and mention of the grant of the patent: **03.11.2021**
(21) Application number: 19382415.8
(22) Date of filing: 23.05.2019
(51) Int. Cl.: F28D 7/16, B21D 53/02, B23K 33/00, B23P 15/26, F02M 26/22, F28D 21/00, F28F 1/02, F28F 1/42, F28F 9/18

(54) **A HEAT EXCHANGER**
WÄRMETAUSCHER
ÉCHANGEUR DE CHALEUR

(43) Date of publication of application: 25.11.2020
(73) Proprietor: Valeo Termico S.A., 50011 Zaragoza (ES)
(72) Inventor: RODRIGO MARCO, Carlos, 50011 ZARAGOZA (ES); ROMERO PÉREZ, Raúl, 50011 ZARAGOZA (ES); JIMÉNEZ PALACIOS, Jesús, 50011 ZARAGOZA (ES); GÓMEZ ZAZURCA, Cristina, 50011 ZARAGOZA (ES)
(74) Representative: Ponti & Partners, S.L.P

(56) References cited:
- EP-A1- 1 559 983
- EP-A2- 1 306 640
- JP-A- 2004 293 988
- US-A- 3 972 371
- US-A- 5 366 006

## Description

The present invention relates to a heat exchanger, particularly, an Exhaust Gas Re-circulation (EGR) cooler, heat exchanger tubes configuring joint between the heat exchanger tubes and inside walls configuring slots on respective collector plates of the EGR cooler, and a method for assembling an EGR cooler. An EGR cooler according to the preamble of claim 1 is disclosed in EP 1 306 640.

### Background of the invention:

A conventional heat exchanger, such as for example, an Exhaust Gas Re-circulation (EGR) cooler includes housing, a pair of spaced apart collector plates disposed at ends of the housing, a heat exchanger core received inside the housing, wherein end portions of heat exchanger tubes of the heat exchanger core are received in slots configured on the respective collector plates. The heat exchanger further includes a pair of heat exchanger tanks, hereinafter, referred to as tanks, wherein each tank is joined to the corresponding collector plate for configuring a sealed connection there between. The tanks are capable of receiving first heat exchanging fluid, often pressurized heat exchanging fluid such as exhaust gases. The tanks in conjunction with the corresponding collector plates facilitate distribution of first heat exchange fluid, particularly, exhaust gases to and collection of first heat exchange fluid from the heat exchange core respectively. The tanks are further connected to respective flanges. The housing receives second heat exchange media, particularly coolant therein and around the heat exchanger tubes through at least one inlet. The second heat exchange media or coolant is delivered out of the housing through at least one outlet after the coolant had extracted heat from the first heat exchange fluid, particularly, exhaust gases flowing through the heat exchanger tubes.

Generally, end portions of the heat exchanger tubes are received inside slots configured on respective collector plates. The end portions of the heat exchanger tubes are joined to inside walls of the slots configured on the collector plates by welding, particularly, laser welding. However, the joint between the end portions of the heat exchanger tubes and the inside walls of the slots configured on the collector plates is prone to welding defects, particularly, lack of welding due to in-sufficient fusion material at the welding site due to the movement of the molten material (plasma) and difficulty in maintaining the molten material at the welding site. Due to lack of welding, gaps appear between the end portions of the heat exchanger tubes and inside walls of the respective slots configured on the collector plates.

Such welding defects are common in case the thickness of the tubes is less and the welding is high speed welding. The welding defects such as gaps between the end portions of the heat exchanger tubes and inside walls of the respective slots may cause leakage and adversely impact the efficiency and performance of the heat exchanger. The welding defects can be prevented by regulating the process parameters, such as for example, laser energy, pulse duration, pulse frequency, power and welding speed during the welding process, however, regulating the process parameters during the welding is complicated and in-convenient. The heat exchangers manufactured by conventional welding processes fails to address the issue of welding defects arising due to insufficient fusion material during high speed welding of the end portions of thin heat exchanger tubes to inside walls of slots.

Accordingly, there is a need for a heat exchanger with such configuration of heat exchanger tubes that even through thin, enables welding, particularly, high speed welding of end portions of the heat exchanger tubes to inside walls of slots configured on collector plates, without causing any welding defects and without need for regulating process parameters during welding. Further, there is a need for a heat exchanger with such configuration of heat exchanger tubes that provide sufficient fusion material to achieve robust welding joint between end portions of thin heat exchanger tubes and inside walls of slots configured on collector plates of a heat exchanger.

### Description of the invention:

An object of the present invention is to obviate the drawbacks associated with conventional heat exchanger configured with the conventional heat exchanger tubes.

Another object of the present invention is to provide a heat exchanger with such configuration of heat exchanger tubes that provide sufficient fusion material for configuring robust weld joint between end portions of the heat exchanger tubes and inside walls of slots configured on the corresponding collector plates.

Another object of the present invention is to provide a simple process for eliminating welding defects caused during high speed welding of end portions of thin heat exchanger tubes to inside walls of slots configured on the collector plate.

In the present description, some elements or parameters may be indexed, such as a first element and a second element. In this case, unless stated otherwise, this indexation is only meant to differentiate and name elements which are similar but not identical. No idea of priority should be inferred from such indexation, as these terms may be switched without betraying the invention. Additionally, this indexation does not imply any order in mounting or use of the elements of the invention.

A heat exchanger is disclosed in accordance with an embodiment of the present invention. The heat exchanger includes housing, a heat exchanger core, a pair of collector plates, a pair of tanks. The heat exchanger core includes a plurality of heat exchanger tubes. The pair of collector plates is disposed at end portions of the heat exchanger tubes. The pair of collector plates is configured with slots that receive the respective end portions of the heat exchanger tubes. The pair of tanks is connected to the respective collector plates. The end portions of each of the plurality of heat exchanger tubes include respective tabs configured thereon. The tabs are configured on at least one pair of opposite sides of section at the respective end portions of the heat exchanger tube and fuse to form a part of welding joint between the end portions of the heat exchange tube and inside walls of the corresponding slots on the collector plates.

Generally, the tabs are extending axially outward from the respective end portions of the plurality of heat exchange tubes.

Specifically, the tabs are configured on opposite sides of rectangular section at the end portions of the plurality of heat exchange tubes.

In accordance with an embodiment of the present invention, the heat exchanger tubes along with the tabs configured at the end portions of the heat exchanger tubes are configured by stamping, bending and welding operation.

Particularly, the tabs configured at the end portions of the heat exchanger tubes fuse to provide sufficient fusion material for configuring robust weld joint between end portions of the heat exchanger tubes and the inside walls of the respective slots.

Further, at least one of the end portions of each of the heat exchanger tubes includes a protrusion to ensure insertion of the end portions in predetermined position and configuration with respect to the slots such that during welding of the end portions of the heat exchanger tube to the inside walls of the slots, at least a portion of the tabs extending out of the slots, fuse and form a part of the weld joint to configure secure weld joint between the end portions of the heat exchange tube and inside walls of the slots configured on the respective collector plates.

Further, heat exchanger includes a plurality of fins lodged between adjacent heat exchanger tubes.

A method of assembling a heat exchanger is disclosed in accordance with an embodiment of the present invention. The method includes the steps of closing one end of housing with a first collector plate, thereafter, receiving a plurality of heat exchanger tubes of a heat exchanger core within the housing such that first end portion of the heat exchanger tubes are received in slots and at least a portion of tabs formed on the first end portion are extending out of the slots configured on the first collector plate, closing the opposite end of the housing with another collector plate such that second end portion of the heat exchanger tubes opposite to the first end portions are received in slots and at least a portion of tabs formed on the second end portion are extending out of the slots configured on the another collector plate disposed opposite to and spaced away from the first collector plate. Thereafter, welding the first and second end portions of the heat exchanger tubes to inside walls of the slots configured on the first and second collector plates respectively, wherein, during welding of the first and second end portions to the inside walls of the respective slots, tabs configured at the first and second end portions of the heat exchanger tubes respectively fuse to form part of welding joint between the first and second end portions of the heat exchange tube and inside walls of the corresponding slots.

### Brief description of the drawings:

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
**FIG. 1** illustrates an isometric view of a heat exchanger, particularly, an Exhaust Gas Re-circulation (EGR) cooler in accordance with an embodiment of the present invention;
**FIG. 2** illustrates a sectional view of a first side of the Exhaust Gas Re-circulation (EGR) cooler of **FIG. 1** depicting internal details, also, is illustrated an enlarged view of a first end portion of a tube before welding along with the tabs formed thereon; and
**FIG. 3** illustrates a sectional view of a second side of the Exhaust Gas Re-circulation (EGR) of **FIG. 1** depicting internal details, also, is illustrated an enlarged view of a second end portion of the tube opposite to the first end portion of the tube before welding, along with the tabs formed thereon; and
**FIG. 4a** illustrates an isometric view of a heat exchanger tube in accordance with an embodiment of the present invention that is used in the Exhaust Gas Re-circulation (EGR) of FIG. 1, also is illustrated an enlarged view of one end of the heat exchanger tube depicting a tab out of a pair of tabs configured thereon;
**FIG. 4b** illustrates a side view of the heat exchanger tube of **FIG. 4a****,** also is illustrated an enlarged view of one end portion of the heat exchanger tube depicting a tab out of a pair of tabs configured thereon;
**FIG. 4c** illustrates a top view of the heat exchanger tube of **FIG. 4b****;** and
**FIG. 5** illustrates a block diagram depicting the steps involved in assembling a heat exchanger in accordance with an embodiment of the present invention.

It must be noted that the figures disclose the invention in a detailed enough way to be implemented, said figures helping to better define the invention if needs be. The invention should however not be limited to the embodiment disclosed in the description.

### Detailed description of the preferred embodiments:

The present invention discloses a heat exchanger, particularly, an Exhaust Gas Re-circulation (EGR) cooler for vehicular applications, wherein the heat exchanger includes thin heat exchanger tubes configured to enable welding, particularly, high speed welding thereof with inside walls of slots configured on respective collector plates. Specifically, the configuration of the heat exchanger tubes facilitates high speed welding of thin heat exchanger tubes without causing any welding defects and without need for regulating process parameters during welding that is required during welding of conventional heat exchanger tubes. More specifically, the heat exchanger includes heat exchanger tubes of the present invention are configured to provide sufficient fusion material for forming robust weld joint between end portions of the heat exchanger tubes and inside walls of slots configured on corresponding collector plates, thereby preventing the any welding defects due to lack of fusion material at the weld site. However, the present invention is not limited to heat exchangers or EGR coolers only, and the present invention is applicable for any structure used in vehicular or non-vehicular applications that involves high speed welding of the tubular elements of thin sections, wherein the tubular elements are required to form robust weld joint with another elements.

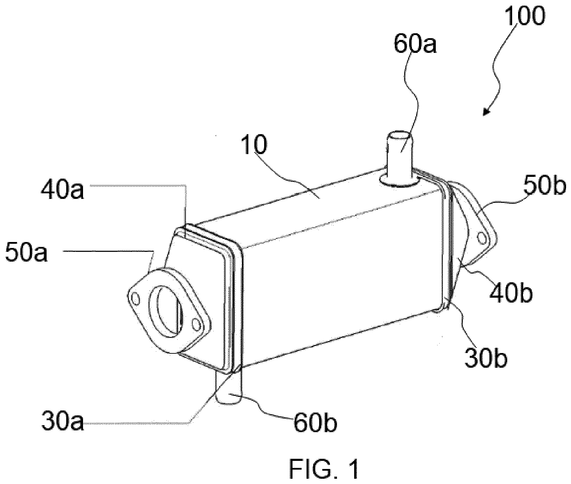

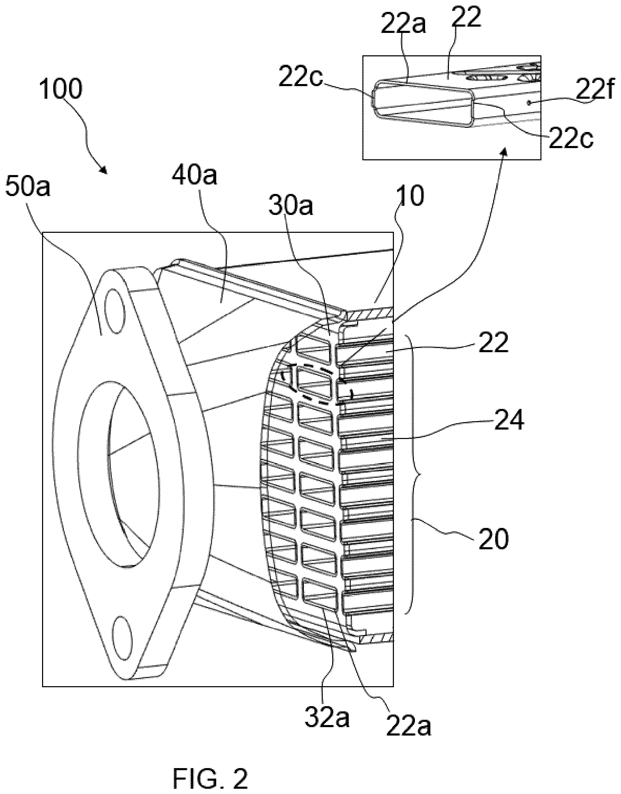

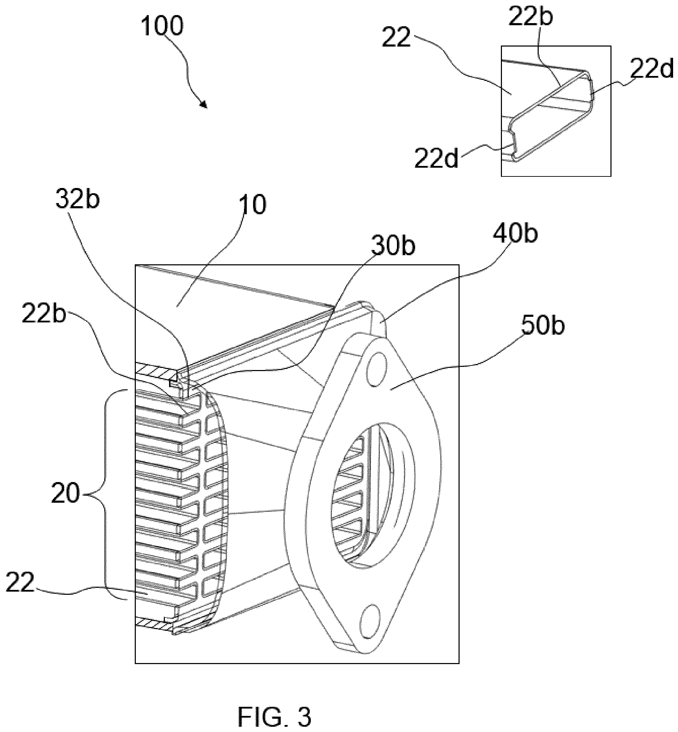

Referring to **FIG. 1** of the accompanying drawings, an isometric view of a heat exchanger, particularly, an Exhaust Gas Re-circulation (EGR) cooler **100,** hereinafter referred to as EGR cooler **100** in accordance with an embodiment of the present invention is depicted. **FIG. 2** and **FIG. 3** illustrate sectional view of a first side and a second side of the Exhaust Gas Re-circulation (EGR) cooler **100** respectively. The EGR cooler **100** includes housing **10,** a heat exchanger core **20,** a pair of spaced apart collector plates **30a** and **30b,** a pair of heat exchanger tanks **40a** and **40b,** a pair of flanges **50a** and **50b,** an inlet **60a** and an outlet **60b.** The pair of collector plates **30a** and **30b,** also referred to as first and second collector plates **30a** and **30b** is connected to two distant and opposite end portions of the heat exchanger core **20** respectively. The heat exchanger core **20** is configured of a plurality of heat exchange elements, particularly, heat exchanger tubes **22** and a plurality of fin elements **24** lodged between the adjacent heat exchanger tubes **22.** The pair of collector plates **30a, 30b** is configured with slots **32a, 32b** for receiving respective end portions **22a, 22b,** also referred to as first and second end portions **22a** and **22b** of the heat exchanger tubes **22.** The end portions **22a, 22b** of the heat exchanger tubes **22** having thin section are joined to inside walls of the slots **32a, 32b** configured on the respective collector plates **30a, 30b** by high speed welding, particularly laser welding for configuring connection between the collector plates **30a, 30b** to the heat exchanger core **20.** Such configuration facilitates distribution of first heat exchange fluid, particularly, exhaust gases to be cooled, to and collection of first heat exchange fluid from the heat exchange core **20** respectively. The housing **10** receives second heat exchange media, particularly coolant therein and around the heat exchanger tubes **22** through at least one inlet **60a.** The second heat exchange media or coolant is delivered out of the housing **10** through the at least one outlet **60b** after the coolant had extracted heat from the first heat exchange fluid, particularly, the exhaust gases flowing through the heat exchanger tubes **22.** The heat exchanger core **20** is received inside the housing **10** such that the heat exchanger tubes **22** in conjunction with the housing **10** configure adjacent yet separated spaces between the collector plates **30a** and **30b** for facilitating heat exchange between first heat exchanging fluid flowing inside the heat exchanger tubes **22** and second heat exchange fluid flowing outside the heat exchanger tubes **22.** Each tank of the pair of heat exchanger tanks **40a, 40b** is joined to the corresponding collector plates **30a, 30b** for configuring a sealed connection between the collector plates **30a, 30b** and the corresponding tanks **40a, 40b.** The tanks **40a, 40b** are capable of receiving first heat exchanging fluid, often pressurized heat exchanging fluid such as exhaust gases. The tanks **40a, 40b** in conjunction with the corresponding collector plates **30a, 30b** facilitate distribution of first heat exchange fluid to and collection of first heat exchange fluid from the heat exchange core **20** respectively. The tanks **40a, 40b** are further connected to the respective flanges **50a, 50b.**

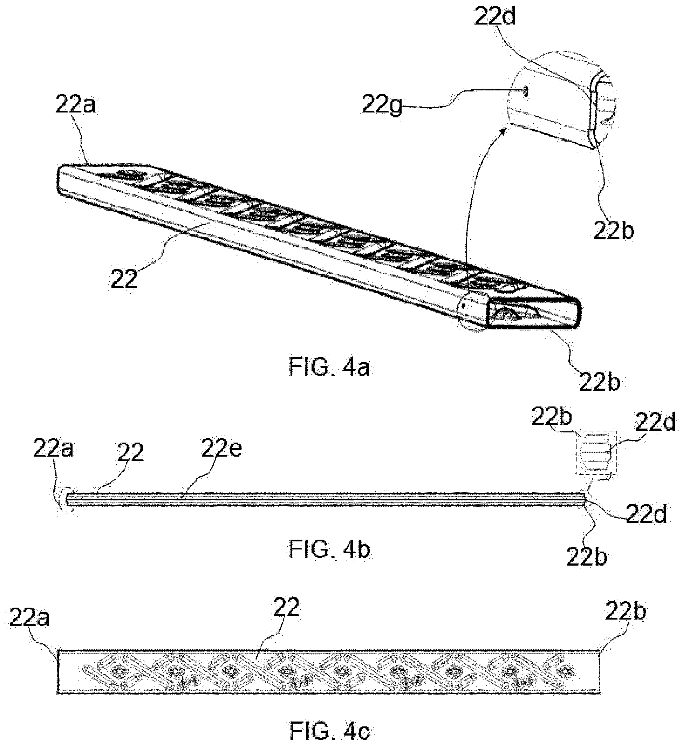

**FIG. 4a** illustrates an isometric view of the tube **22** used in the Exhaust Gas Re-circulation (EGR) **100,** also is illustrated an enlarged view of one end portion **22b** of the tube **22** depicting the tab **22d** configured thereon. **FIG. 4b** illustrates a side view of the tube **22,** also is illustrated an enlarged view of one end portion **22b** of the tube **22** depicting the tab **22d** configured thereon. **FIG. 4c** illustrates a top view of the tube **22.** The first and second end portions **22a, 22b** of each of the heat exchanger tube **22** includes respective tabs **22c, 22d** configured thereon, the tabs **22c, 22d** are configured on at least one pair of opposite sides of section at the respective end portions **22a, 22b** of the heat exchange tube **22.** The tabs **22c, 22d** fuse to form a part of welding joint between the end portions **22a, 22b** of the heat exchanger tube **22** and the inside walls of corresponding slots **32a, 32b** configured on the collector plates **30a, 30b.** With such configuration of the tabs, **22c, 22d,** sufficient fusion material is available at the weld site for configuring robust weld joint between the end portions **22a, 22b** of the heat exchanger tube **22** and the inside walls of corresponding slots **32a, 32b.**

Again referring to **FIG. 2** of the accompanying **FIGS.,** wherein the **FIG. 2** illustrates sectional view of a first side of the EGR cooler **100** depicting internal details. Also, is illustrated an enlarged view of first end portion **22a** of a heat exchanger tube of the plurality of heat exchanger tubes **22** before welding, along with the tabs **22c** formed on lateral sides of rectangular section at the first end portion **22a** of the heat exchanger tube **22.** The rectangular sections at the first end portions **22a** of the tubes **22** are complimentary to and are received in the slots **32a** configured on the corresponding collector plates **30a.** The tabs **22c** are configured on opposite sides of a rectangular section at the first end portion **22a** of the heat exchanger tubes **22.** The tabs **22c** are extending axially outward from the first end portion **22a** of the heat exchanger tube **22.** The heat exchanger tube **22** along with the tabs **22c** configured at the first end portion **22a** of the heat exchanger tube **22** and tabs **22d** configured at the second end portion **22b** of the tube **22** is configured by stamping, bending and welding operation. More specifically, a blank is so stamped and folded along fold lines that tabs **22c, 22d** are configured at respective end portions **22a, 22b** of the tube **22** when stamped blank is folded along fold lines and joined along the join line **22e** illustrated in **FIG. 4b****.** The end portion **22a** of the heat exchanger tube **22** further includes a protrusion **22f** (that acts as a poka-yoke feature for ensuring insertion of the end portion **22a** of the tube **22** in predetermined position and orientation with respect to the slot **32a** configured on the collector plate **30a** such that at least a portion of the tabs **22c** extending out of the slot **32a,** fuse and form a part of the weld joint during welding to configure secure weld joint between the end portion **22a** of the heat exchanger tube **22** and inside walls of the slot **32a** configured on the collector plate **30a.** In a preferred embodiment, at least one of the end portions **22a, 22b** includes protrusion **22f, 22g** that acts as poka-yoke feature for ensuring insertion of a predetermined length of the end portion **22a, 22b** of the tube **22** in the slots **32a, 32b** configured on the collector plates **30a, 30b** respectively. The tabs **22c** provide additional material that fuse during the welding to provide sufficient fusion material at the welding site and configure part of the welding joint to facilitate configuring robust joint between the first end portion **22a** of the tube **22** and inside walls of the corresponding slot **32a** configured on the first collector plate **30a** of the EGR cooler **100.** Although, the tabs **22c** are formed on lateral sides of rectangular section at the first end portion **22a** of the tube **22,** however, the present invention is not limited to any particular configuration, number and placement of the tabs **22c,** method of configuring the tabs **22c** on the tubes as far as the tabs **22c** fuse during the welding of the first end portion **22a** of the tube **22** to the inside walls of the slot **32a** configured on the collector plate **30a** to provide sufficient fusion material at the welding site to facilitate configuring robust joint between the first end portion **22a** of the heat exchanger tube **22** and inside walls of the corresponding slot **32a** configured on the first collector plate **30a** of the EGR cooler **100.**

Similarly again referring to **FIG. 3** of the accompanying **FIGS.,** the **FIG 3** illustrates a sectional view of a second side of the EGR cooler **100** depicting internal details. Also, is illustrated an enlarged view of the second end portion **22b** of a heat exchanger tube of the plurality of heat exchanger tubes **22** before welding, along with the tabs **22d** formed on lateral sides of rectangular section at the second end portion **22b** of the tube **22.** The rectangular sections at the second end portions **22b** of the tubes **22** are complimentary to and are received in the slots **32b** configured on the corresponding collector plates **30b.** The tabs **22d** are configured on opposite sides of a rectangular section at the second end portion **22b** of the heat exchanger tubes **22.** The tabs **22d** are extending axially outward from the second end portion **22b** of the heat exchanger tube **22.** The heat exchanger tube **22** along with the tabs **22d** configured at the second end portion **22b** of the heat exchanger tube **22** and the tabs **22c** configured at the first end portion **22a** of the heat exchanger tube **22** is configured by stamping, bending and welding operation. More specifically, a blank is so stamped and folded along fold lines that tabs **22c, 22d** are configured at respective end portions **22a, 22b** of the tube **22** when the stamped blank is folded along fold lines and joined along the join line **22e** illustrated in **FIG. 4b****.** The end portion **22b** of the tube **22** further includes a protrusion **22g** as illustrated in FIG. **4a** that acts as a poka-yoke feature for ensuring insertion of a pre-determined length of the end portion **22b** of the tube **22** in correct position and orientation with respect to the slot **32b** configured on the collector plate **30b.** Such configuration enables the tabs **22d** to form a part of the weld joint during welding of the end portions **22b** of the heat exchanger tubes **22** to the inside walls configuring the slot **32b** configured on the collector plate **30b,** thereby configuring secure weld joint between the end portion **22b** of the tube **22** and inside walls of the slot **32b** configured on the collector plate **30b.** The tabs **22d** provide additional material that fuse during the welding to provide sufficient fusion material at the welding site and configure part of the welding joint to facilitate configuring robust joint between the second end portion **22b** of the tube **22** and inside walls of a corresponding slot **32b** configured on the second collector plate **30b** of the EGR cooler **100.** Although, the tabs **22d** are formed on lateral sides of rectangular section at the second end portion **22b** of the tube **22,** however, the present invention is not limited to any particular configuration, number and placement of the tabs **22d,** method of configuring the tabs **22d** on the tubes **22** as far as the tabs **22d** fuse during the welding of the second end portion **22b** of the tube **22** to the inside walls of the corresponding slot **32b** to provide sufficient fusion material at the welding site to facilitate configuring robust joint between the second end portion **22b** of the tube **22** and inside walls of the corresponding slot **32b** configured on the second collector plate **30b** of the EGR cooler **100.**

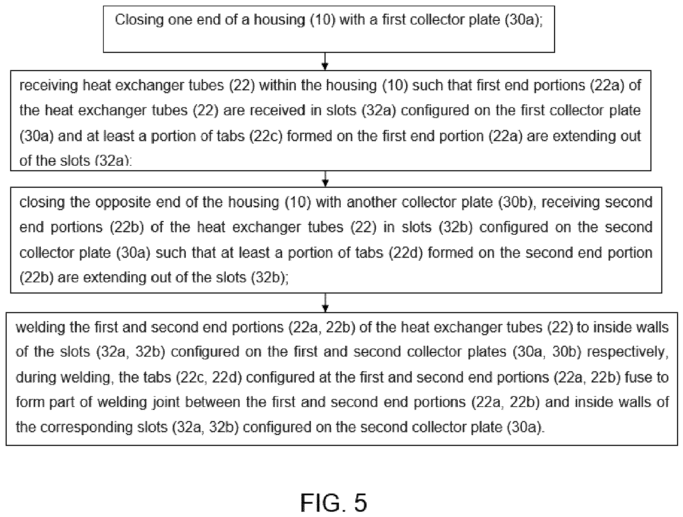

Also, a method of assembling a heat exchanger, particularly, an EGR cooler **100** is disclosed in accordance with an embodiment of the present invention. **FIG. 5** illustrates a block diagram depicting the steps involved in assembling a heat exchanger in accordance with an embodiment of the present invention. The method includes the steps of closing one end of housing **10** with a first collector plate **30a.** Thereafter, receiving a plurality of heat exchanger tubes **22** of a heat exchanger core **20** within the housing **10** such that first end portion **22a** of the heat exchanger tubes **22** are received in the slots **32a** configured on the first collector plate **30a.** Thereafter, closing the opposite end of the housing **10** with another collector plate **30b** such that the second end portion **22b** of the heat exchanger tubes **22** opposite to the first end portion **22a** are received in slots **32b** configured on the another collector plate **30b** disposed opposite to and spaced away from the first collector plate **30a.** Thereafter, welding the first and second end portions **22a, 22b** of the heat exchanger tubes **22** to inside walls of slots **32a, 32b,** wherein, during welding of the first and second end portions **22a, 22b** to the inside walls of slots **32a, 32b** configured on the first and second collector plates **30a, 30b,** the tabs **22c, 22d** configured at the first and second end portions **22a, 22b** of the heat exchanger tubes **22** respectively fuse to form part of the welding joint between the first and second end portions **22a, 22b** of the heat exchange tube **22** and inside walls of the corresponding slots **32a, 32b.**

## Claims

1. A heat exchanger (100) comprising:
• housing (10);
• a heat exchanger core (20) comprising a plurality of heat exchanger tubes (22);
• a pair of collector plates (30a, 30b) disposed at end portions (22a, 22b) of the heat exchanger tubes (22), the pair of collector plates (30a, 30b) is configured with slots (32a, 32b) respectively adapted to receive respective end portions (22a, 22b) of the heat exchanger tubes (22); and
• a pair of tanks (40a, 40b) connected to the respective collector plates (30a, 30b),
**characterized in that** the end portions (22a, 22b) of each of the plurality of heat exchanger tubes (22) comprises respective tabs (22c, 22d) configured thereon, the tabs (22c, 22d) are configured on at least one pair of opposite sides of section at the respective end portions (22a, 22b) of the heat exchange tube (22) and are adapted to fuse to form a part of welding joint between the end portions (22a,22b) of the heat exchange tube (22) and inside walls of the corresponding slots (32a,32b) on the collector plates (30a, 30b).

2. The heat exchanger (100) as claimed in the previous claim, wherein the tabs (22c, 22d) are extending axially outward from the respective end portions (22a, 22b) of the plurality of heat exchange tubes (22).

3. The heat exchanger (100) as claimed in claim 1, wherein the tabs (22c, 22d) are configured on opposite sides of rectangular section at the respective end portions (22a, 22b) of the plurality of heat exchange tubes (22).

4. The heat exchanger (100) as claimed in claim 1, wherein the heat exchanger tubes (22) along with the tabs (22c,22d) configured at the respective end portions (22a, 22b) of the heat exchanger tubes (22) are configured by stamping, bending and welding operation.

5. The heat exchanger (100) as claimed in claim 1, wherein the tabs (22c, 22d) configured at the respective end portions (22a, 22b) of the heat exchanger tubes (22) are adapted to fuse to provide sufficient fusion material for configuring robust weld joint between the end portions (22a, 22b) of the heat exchanger tubes (22) and the inside walls of the respective slots (32a, 32b).

6. The heat exchanger (100) as claimed in claim 1, wherein at least one of the end portions (22a, 22b) of each of the heat exchanger tubes (22) comprises a protrusion (22f, 22g) adapted to ensure insertion of the end portions (22a, 22b) in predetermined position and configuration with respect to the slots (32a, 32b) such that during welding of the end portions (22a, 22b) of the heat exchanger tube (22) to the inside walls of the slots (32a, 32b), at least a portion of the tabs (22c, 22d) extending out of the slots, fuse and form a part of the weld joint to configure secure weld joint between the end portions (22a, 22b) of the heat exchange tube (22) and inside walls of the slots (32a,32b) configured on the respective collector plates (30a, 30b).

7. The heat exchanger (100) as claimed in claim 1, further comprising a plurality of fins (24) lodged between adjacent heat exchanger tubes (22).

8. A method of assembling a heat exchanger (100), the method comprising the steps of:
• closing one end of a housing (10) with a first collector plate (30a);
• receiving a plurality of heat exchanger tubes (22) of a heat exchanger core (20) within the housing (10) such that first end portion (22a) of the heat exchanger tubes (22) are received in slots (32a) and at least a portion of tabs (22c) formed on the first end portion (22a) are extending out of the slots (32a) configured on the first collector plate (30a);
• closing the opposite end of the housing (10) with another collector plate (30b) such that second end portion (22b) of the heat exchanger tubes (22) opposite to the first end portion (22a) are received in slots (30b) and at least a portion of tabs (22d) formed on the second end portion (22b) are extending out of the slots (32b) configured on the another collector plate (30b) disposed opposite to and spaced away from the first collector plate (30a);
• welding the first and second end portions (22a, 22b) of the heat exchanger tubes (22) to inside walls of the slots (32a, 32b) configured on the first and second collector plates (30a, 30b) respectively,
**characterized in that**, during welding of the first and second end portions (22a, 22b) to the inside walls of the respective slots (32a,32b), the tabs (22c, 22d) configured at the first and second end portions (22a, 22b) of the heat exchanger tubes (22) respectively fuse to form part of welding joint between the first and second end portions (22a, 22b) of the heat exchange tube (22) and inside walls of the corresponding slots (32a, 32b).

## Patentansprüche

1. Wärmetauscher (100), umfassend:
Gehäuse (10);
einen Wärmetauscherkern (20), umfassend eine Vielzahl von Wärmetauscherrohren (22);
ein Paar von Kollektorplatten (30a, 30b), die an Endabschnitten (22a, 22b) der Wärmetauscherrohre (22) eingerichtet sind, wobei das Paar von Kollektorplatten (30a, 30b) mit Schlitzen (32a, 32b) ausgelegt ist, die jeweils dazu eingerichtet sind, entsprechende Endabschnitte (22a, 22b) der Wärmetauscherrohre (22) aufzunehmen; und
ein Paar von Tanks (40a, 40b), die mit den jeweiligen Kollektorplatten (30a, 30b) verbunden sind,
**dadurch gekennzeichnet, dass** die Endabschnitte (22a, 22b) jedes der Vielzahl von Wärmetauscherrohren (22) jeweilige Laschen (22c, 22d) umfassen, die darauf ausgelegt sind, wobei die Laschen (22c, 22d) auf mindestens einem Paar von gegenüberliegenden Seiten des Abschnitts an den jeweiligen Endabschnitten (22a, 22b) des Wärmetauscherrohrs (22) ausgelegt sind und dazu eingerichtet sind, zu schmelzen, zu dem Zweck, einen Teil von Schweißverbindung zwischen den Endabschnitten (22a, 22b) des Wärmetauscherrohrs (22) und Innenwänden der entsprechenden Schlitze (32a, 32b) an den Kollektorplatten (30a, 30b) zu bilden.

2. Wärmetauscher (100) nach dem vorhergehenden Anspruch, wobei sich die Laschen (22c, 22d) von den jeweiligen Endabschnitten (22a, 22b) der Vielzahl von Wärmetauscherrohren (22) axial nach außen erstrecken.

3. Wärmetauscher (100) nach Anspruch 1, wobei die Laschen (22c, 22d) auf gegenüberliegenden Seiten von rechteckigem Querschnitt an den jeweiligen Endabschnitten (22a, 22b) der Vielzahl von Wärmetauscherrohren (22) ausgelegt sind.

4. Wärmetauscher (100) nach Anspruch 1, wobei die Wärmetauscherrohre (22) zusammen mit den Laschen (22c, 22d), die an den jeweiligen Endabschnitten (22a, 22b) der Wärmetauscherrohre (22) ausgelegt sind, durch Stanzen, Biegen und Schweißen ausgelegt sind.

5. Wärmetauscher (100) nach Anspruch 1, wobei die an den jeweiligen Endabschnitten (22a, 22b) der Wärmetauscherrohre (22) ausgelegten Laschen (22c, 22d) dazu eingerichtet sind, zu schmelzen, zu dem Zweck, genügend Schmelzmaterial zum Auslegen von robuster Schweißverbindung zwischen den Endabschnitten (22a, 22b) der Wärmetauscherrohre (22) und den Innenwänden der jeweiligen Schlitze (32a, 32b) bereitzustellen.

6. Wärmetauscher (100) nach Anspruch 1, wobei mindestens einer der Endabschnitte (22a, 22b) jedes der Wärmetauscherrohre (22) einen Vorsprung (22f, 22g) umfasst, der dazu eingerichtet ist, das Einsetzen der Endabschnitte (22a, 22b) in vorbestimmter Position und Auslegung in Bezug auf die Schlitze (32a, 32b) sicherzustellen, derart, dass während des Schweißens der Endabschnitte (22a, 22b) des Wärmetauscherrohrs (22) an die Innenwände der Schlitze (32a, 32b) zumindest ein Teil der Laschen (22c, 22d), die sich aus den Schlitzen heraus erstrecken, schmelzen und einen Teil der Schweißverbindung bilden, zu dem Zweck, sichere Schweißverbindung zwischen den Endabschnitten (22a, 22b) des Wärmetauscherrohrs (22) und Innenwänden der Schlitze (32a, 32b), die an den jeweiligen Kollektorplatten (30a, 30b) ausgelegt sind, auszulegen.

7. Wärmetauscher (100) nach Anspruch 1, ferner umfassend eine Vielzahl von Rippen (24), die zwischen benachbarten Wärmetauscherrohren (22) angeordnet sind.

8. Verfahren zum Zusammenbau eines Wärmetauschers (100), wobei das Verfahren die folgenden Schritte umfasst:
Verschließen eines Endes eines Gehäuses (10) mit einer ersten Kollektorplatte (30a);
Aufnehmen einer Vielzahl von Wärmetauscherrohren (22) eines Wärmetauscherkerns (20) innerhalb des Gehäuses (10), derart, dass ein erster Endabschnitt (22a) der Wärmetauscherrohre (22) in Schlitzen (32a) aufgenommen wird und zumindest ein Teil von am ersten Endabschnitt (22a) ausgebildeten Laschen (22c) aus den an der ersten Kollektorplatte (30a) ausgelegten Schlitzen (32a) herausragen;
Verschließen des gegenüberliegenden Endes des Gehäuses (10) mit einer weiteren Kollektorplatte (30b), derart, dass der zweite Endabschnitt (22b) der Wärmetauscherrohre (22), der dem ersten Endabschnitt (22a) gegenüberliegt, in Schlitzen (30b) aufgenommen wird und mindestens ein Teil von am zweiten Endabschnitt (22b) ausgebildeten Laschen (22d) aus den Schlitzen (32b) herausragt, die an der weiteren Kollektorplatte (30b) ausgelegt sind, die gegenüber der ersten Kollektorplatte (30a) und mit Abstand zu dieser eingerichtet ist;
Verschweißen der ersten und der zweiten Endabschnitte (22a, 22b) der Wärmetauscherrohre (22) mit Innenwänden der Schlitze (32a, 32b), die an der ersten bzw. der zweiten Kollektorplatte (30a, 30b) ausgelegt sind,
**dadurch gekennzeichnet, dass** während des Verschweißens der ersten und der zweiten Endabschnitte (22a, 22b) mit den Innenwänden der jeweiligen Schlitze (32a, 32b) die Laschen (22c, 22d), die an den ersten bzw. den zweiten Endabschnitten (22a, 22b) der Wärmetauscherrohre (22) ausgelegt sind, schmelzen, zu dem Zweck, einen Teil von Schweißverbindung zwischen den ersten und den zweiten Endabschnitten (22a, 22b) des Wärmetauscherrohrs (22) und Innenwänden der entsprechenden Schlitze (32a, 32b) zu bilden.

## Revendications

1. Échangeur de chaleur (100) comprenant :
• un boîtier (10) ;
• un cœur d'échangeur de chaleur (20) comprenant une pluralité de tubes d'échangeur de chaleur (22) ;
• une paire de plaques collectrices (30a, 30b) disposées dans des parties d'extrémité (22a, 22b) des tubes d'échangeur de chaleur (22), la paire de plaques collectrices (30a, 30b) étant configurée avec des fentes (32a, 32b) respectivement adaptées pour recevoir des parties d'extrémité respectives (22a, 22b) des tubes d'échangeur de chaleur (22) ; et
• une paire de cuves (40a, 40b) raccordées aux plaques collectrices respectives (30a, 30b),
**caractérisé en ce que** les parties d'extrémité (22a, 22b) de chacun de la pluralité de tubes d'échangeur de chaleur (22) comprennent des languettes respectives (22c, 22d) configurées par-dessus, les languettes (22c, 22d) sont configurées sur au moins une paire de côtés opposés de section au niveau des parties d'extrémité respectives (22a, 22b) du tube d'échangeur de chaleur (22) et sont adaptées pour fondre pour former une partie de joint de soudure entre les parties d'extrémité (22a, 22b) du tube d'échangeur de chaleur (22) et des parois intérieures des fentes correspondantes (32a, 32b) sur les plaques collectrices (30a, 30b).

2. Échangeur de chaleur (100) selon la revendication précédente, dans lequel les languettes (22c, 22d) s'étendent axialement vers l'extérieur depuis les parties d'extrémité respectives (22a, 22b) de la pluralité de tubes d'échangeur de chaleur (22).

3. Échangeur de chaleur (100) selon la revendication 1, dans lequel les languettes (22c, 22d) sont configurées sur des côtés opposés de section rectangulaire au niveau des parties d'extrémité respectives (22a, 22b) de la pluralité de tubes d'échangeur de chaleur (22).

4. Échangeur de chaleur (100) selon la revendication 1, dans lequel les tubes d'échangeur de chaleur (22) avec les languettes (22c, 22d) configurées au niveau des parties d'extrémité respectives (22a, 22b) des tubes d'échangeur de chaleur (22) sont configurés par une opération d'estampage, cintrage et soudage.

5. Échangeur de chaleur (100) selon la revendication 1, dans lequel les languettes (22c, 22d) configurées au niveau des parties d'extrémité respectives (22a, 22b) des tubes d'échangeur de chaleur (22) sont adaptées pour fondre pour fournir un matériau de fusion suffisant pour configurer un joint de soudure robuste entre les parties d'extrémité (22a, 22b) des tubes d'échangeur de chaleur (22) et les parois intérieures des fentes respectives (32a, 32b).

6. Échangeur de chaleur (100) selon la revendication 1, dans lequel au moins une des parties d'extrémité (22a, 22b) de chacun des tubes d'échangeur de chaleur (22) comprend une saillie (22f, 22g) adaptée pour assurer l'insertion des parties d'extrémité (22a, 22b) dans une position et une configuration prédéterminées par rapport aux fentes (32a, 32b) de telle sorte que, pendant le soudage des parties d'extrémité (22a, 22b) du tube d'échangeur de chaleur (22) aux parois intérieures des fentes (32a, 32b), au moins une partie des languettes (22c, 22d) s'étendant hors des fentes fond et forme une partie du joint de soudure pour configurer un joint de soudure sûr entre les parties d'extrémité (22a, 22b) du tube d'échangeur de chaleur (22) et les parois intérieures des fentes (32a, 32b) configurées sur les plaques collectrices respectives (30a, 30b).

7. Échangeur de chaleur (100) selon la revendication 1, comprenant en outre une pluralité d'ailettes (24) logées entre tubes d'échangeur de chaleur adjacents (22).

8. Procédé d'assemblage d'un échangeur de chaleur (100), le procédé comprenant les étapes de :
• fermeture d'une extrémité d'un boîtier (10) avec une première plaque collectrice (30a) ;
• réception d'une pluralité de tubes d'échangeur de chaleur (22) d'un cœur d'échangeur de chaleur (20) à l'intérieur du boîtier (10) de telle sorte qu'une première partie d'extrémité (22a) des tubes d'échangeur de chaleur (22) soit reçue dans des fentes (32a) et au moins une partie de languettes (22c) formées sur la première partie d'extrémité (22a) s'étende hors des fentes (32a) configurées sur la première plaque collectrice (30a) ;
• fermeture de l'extrémité opposée du boîtier (10) avec une autre plaque collectrice (30b) de telle sorte qu'une deuxième partie d'extrémité (22b) des tubes d'échangeur de chaleur (22) à l'opposé de la première partie d'extrémité (22a) soit reçue dans des fentes (30b) et au moins une partie de languettes (22d) formées sur la deuxième partie d'extrémité (22b) s'étende hors des fentes (32b) configurées sur l'autre plaque collectrice (30b) disposée en face de et espacée de la première plaque collectrice (30a) ;
• soudage des première et deuxième parties d'extrémité (22a, 22b) des tubes d'échangeur de chaleur (22) à des parois intérieures des fentes (32a, 32b) respectivement configurées sur les première et deuxième plaques collectrices (30a, 30b),
**caractérisé en ce que**, pendant le soudage des première et deuxième parties d'extrémité (22a, 22b) aux parois intérieures des fentes respectives (32a, 32b), les languettes (22c, 22d) respectivement configurées au niveau des première et deuxième parties d'extrémité (22a, 22b) des tubes d'échangeur de chaleur (22) fondent pour former une partie de joint de soudure entre les première et deuxième parties d'extrémité (22a, 22b) du tube d'échangeur de chaleur (22) et des parois intérieures des fentes correspondantes (32a, 32b).
